# EUROPEAN PATENT SPECIFICATION

(11) **EP 2 125 337 B1**
(45) Date of publication and mention of the grant of the patent: **23.02.2011**
(21) Application number: 08702174.7
(22) Date of filing: 24.01.2008
(51) Int. Cl.: B29C 65/74, B29C 69/00, F24F 13/02, F16L 47/20

(54) **METHOD FOR PRODUCING DUCTWORK CONNECTING COMPONENTS FOR AIR-HANDLING SYSTEMS, CONNECTING COMPONENTS AND AIR-HANDLING SYSTEM**
VERFAHREN ZUR HERSTELLUNG VON LEITUNGSSYSTEME VERBINDENDEN KOMPONENTEN FÜR LÜFTUNGSSYSTEME, VERBINDUNGSKOMPONENTEN UND LÜFTUNGSSYSTEM
PROCÉDÉ DE FABRICATION DE COMPOSANTS DE RACCORDEMENT DE CANALISATIONS POUR DES SYSTÈMES DE TRAITEMENT DE L'AIR, COMPOSANTS DE RACCORDEMENT ET SYSTÈME DE TRAITEMENT DE L'AIR

(30) Priority: 25.01.2007 HU 0700087
(43) Date of publication of application: 02.12.2009
(73) Proprietor: Origo Plan Kft., 1126 Budapest (HU)
(72) Inventor: LÖRINCZ, Péter, H-1126 Budapest (HU)
(74) Representative: Kovacs, Ivanné
(86) International application number: PCT/HU2008/000007
(87) International publication number: WO 2008/090393

(56) References cited:
- EP-A- 0 546 551
- FR-A- 1 387 004
- JP-A- 6 031 807

## Description

### Field of the invention

The present invention relates to a method for producing ductwork connecting components for air-handling systems such as commercial or industrial ventilation and air-conditioning, connecting components having preferably a circular cross section and being formed from a heat insulating material. The ductwork connecting components made according to the invention can be used in air-handling systems

### Background of the invention

The different air-handling systems are made of duct elements arranged according to a given plan and the duct elements are coupled by means of connecting components. The ductwork components may include ducts (straight or bent), boots, registers, tees, reducers, etc., hereafter referred as connecting components. Both the duct elements and the connecting components are generally made of metal in order to assure their durability and they are provided with a single-layer or multilayer insulation, if needed. Producing such systems are quite expensive, and their assembling, especially their maintenance and/or replacement is very difficult.

FR-A-1-387 004 describes a method for producing ductwork connecting components from foam-related material. There is no teaching however regarding a special material which can be used in air-handling systems. The elements described here are duct elements only and not ductwork connecting components which must have a special shape.

### Summary of the invention

It has been recognized that instead of using metal for producing the duct elements and/or connecting components of air-handling systems, using a kind of plastic material proposed for air-handling purposes makes it possible to provide air-handling systems being less complicated and exhibiting superior handling, performance and aesthetic properties. According to the experiences and observations the chemically cross-linked polyethylene with closed cell-structure, i.e. the polyolefine foam is the one being applicable for this aim. The duct elements can be made by winding up said polyolefine foam on one hand and said material can also be used for preparing the connecting components of the ductwork on the other hand.

The object of the present invention is a method for producing ductwork connecting components, such as elbows, tees, boots, reducers, take-off-s for air-handling systems by preparing first the pattern of a given connecting component. Next cutting the pattern out, and at last preparing the final shape of the connecting component by welding the corresponding edges.

The chemically cross-linked polyolefine with closed cell-structure, hereafter polyolefine foam, being the raw material will advantageously be covered with an evaporized metal layer before cutting on one side, or it can be covered with another non-metal film layer on the other side.

The ductwork connecting components made according to the invention can be used preferably for air-handling systems. The connecting components comprising a polyolefine foam being preferably strengthened with metal along the connecting edges.

The connecting components are advantageously provided with evaporized metal layer on the outer surface. The bulk density of the sheet material made of polyolefine foam is in the range of 30 - 90 kg/m³.

### Brief description of the drawings

The present invention will now be appeared in more detail with the help of the enclosed figures, where
Fig. 1 shows in lateral view a duct element coupled with a connecting component prepared according to the invention and having the same diameter as that of the duct and arranged in an angle of 45° in relation to the axis of the duct element,
Fig. 2 shows in lateral view a duct element coupled with a connecting component according to the invention prepared as a reducer and arranged in an angle of 45° in relation to the axis of the duct element,
Fig. 3 shows in lateral view a duct element coupled with a connecting component according to the invention being bent in an angle of 45° in relation to the axis of the duct element,
Fig. 4 shows in lateral view a connecting component according to the invention being bent in an angle of 90° in relation to the axis of the duct element,
Fig. 5 shows in lateral view a straight duct element provided with a sound-damping layer,
Fig. 6 shows in lateral view a connecting component according to the invention being bent in an angle of 90° in relation to the axis of the duct element and provided with a sound-damping layer,
Fig. 7 shows in lateral view a connecting component according to the invention being formed as a reducer being not coaxial with the duct element to be coupled to,
Fig. 8 shows a boot in lateral view,
Fig. 9 shows a coupling member for the connecting component in lateral view,
Fig. 10 shows a reducer in lateral view,
Fig. 11 shows a tee in lateral view, where the diameter of the tee is the same as that of the duct to be coupled to,
Fig. 12 shows a tee in lateral view, where the diameter of the tee is different from that of the duct to be coupled to,
Fig. 13 shows a supporting component for an air grid in lateral view,
Fig. 14 shows an end-closure in lateral view,
Fig. 15 shows a support element in top view,
Figs. 16-18 show different duct elements (being fixed, flexible and perforated) in lateral view, and
Figs. 19-20 show cut patterns.

### Detailed description of the Preferred embodiments

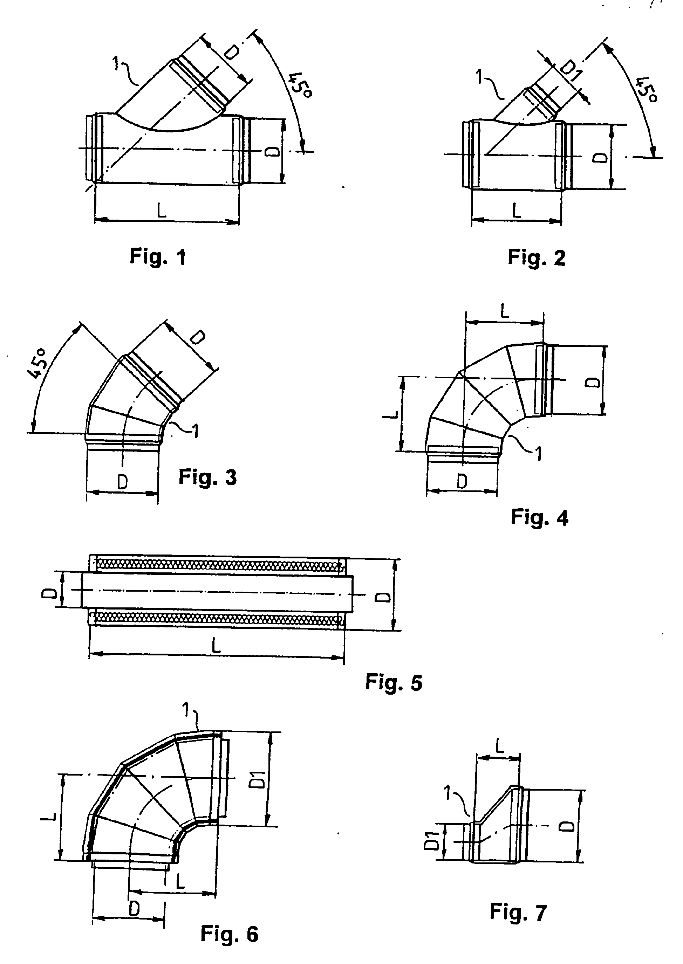

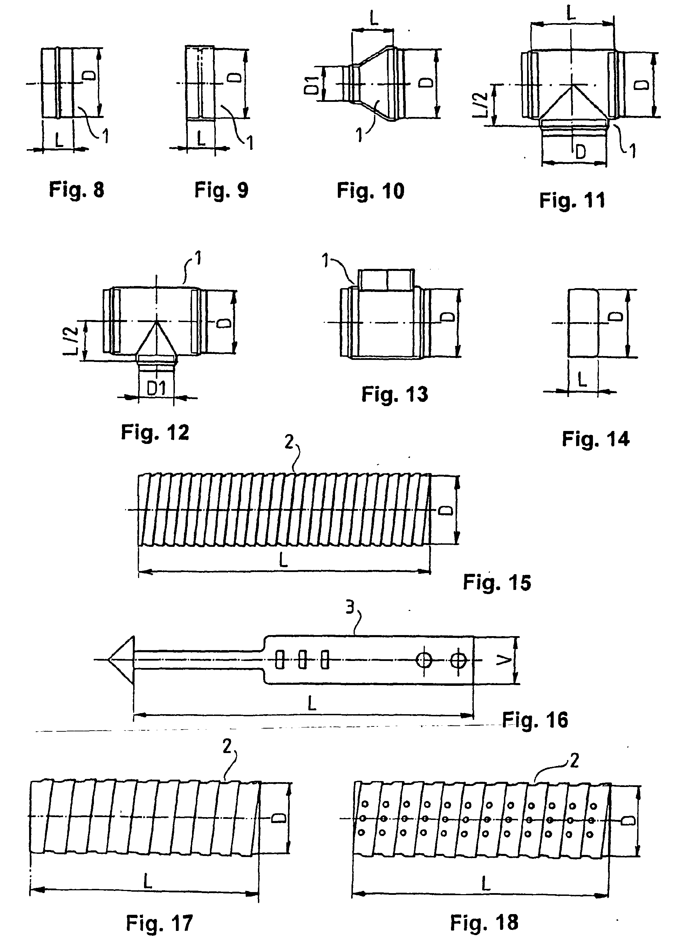

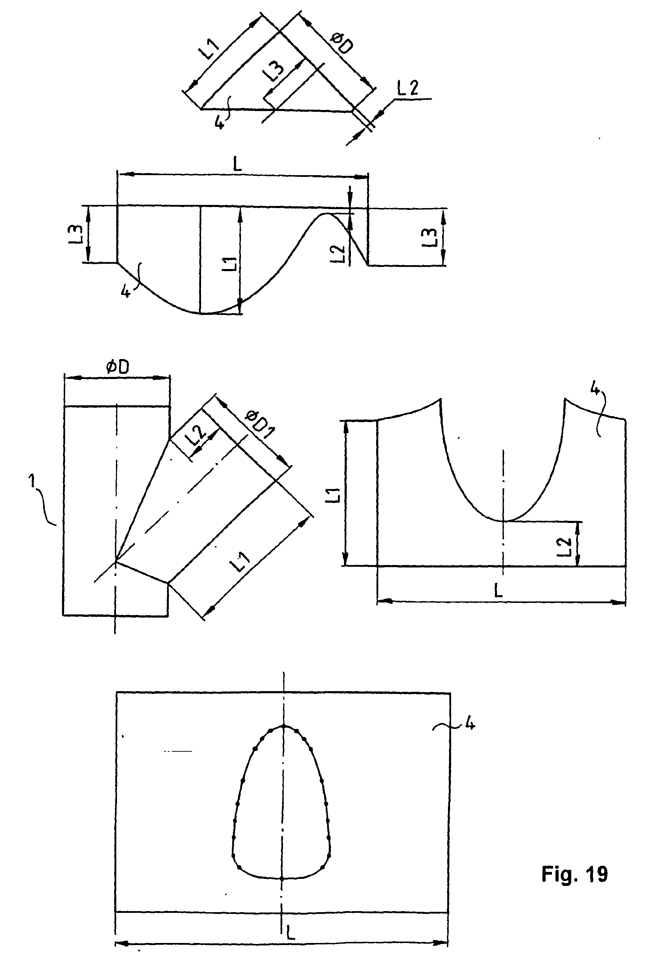

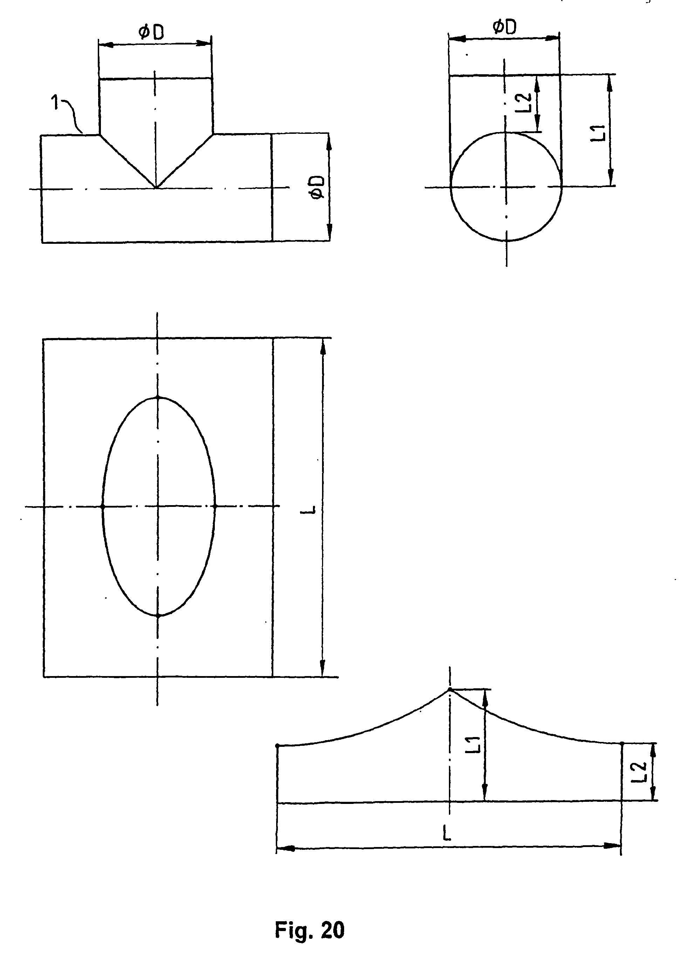

Each of the connecting components shown in Figs. 1-13 has been formed according to the method of present invention and is mainly to be used for air-handling systems. In Fig. 15 a support element 3 is to be seen applied for connecting components 1 and duct elements 2. In Figs. 16-18 duct elements 2 are to be seen forming a part of an air-handling system and to said duct elements connecting components 1 can be coupled. In Figs. 19 and 20 patterns 4 of several connecting components (T-Y take off-s) can be seen produced by the steps realizing the method of the present invention. Each connecting component 1 according to the invention is prepared from a foam-sheet of polyolefine. First pattern 4 of connecting component 1 is made, then the pattern 4 is cut out from the foam sheet of polyolefine, and at last the final shape of connecting component 1 is formed by welding the corresponding edges to each other. Welding may occur anyway being applicable to the material given, hot welding is, however, preferred.

Depending on the field of end-use the foam-sheet of polyolefine forming the raw material can be covered by an evaporized metal layer. The metal layer should be outside of the end product. The other side of the foam sheet - lying inside of the end product - can be covered with a different film layer.

Connecting component 1 cut out and welded can be provided with boots on the edges to be coupled to the duct element. The boots have a double function: namely assuring the stability of the shape of the connecting component and the dimensional accuracy of coupling on one hand, and enabling quick coupling and assembling on the other hand.

The bulk density of the foam-sheet of polyolefine used for connecting component 1 of the invention depends on the measure of the connecting component 1 and is in the range of 30 - 90 kg/m³.

After assembling there is no need for additional heat insulation or damp-proof insulation, thus the demand for live labour is greatly decreasing.

The wall thickness of the foam-sheet of polyolefine used for connecting components 1 according to the invention is preferably between 10 and 15 mm, assuring minimal waste of heat and eliminating the condensation of vapour when used for air-conditioning purposes.

The connecting components according to the present invention may be coupled to duct elements of circular cross-section being available on the market and being used for air-channels of air-handling systems. Their design is air-impervious and aesthetic. As mentioned above it does not need any additional heat-insulation or any insulation against vapour-condensation.

In case of any failure, defect or contamination the connecting component according to the present invention should simply be replaced, the removed element itself can entirely be recycled.

The operating temperature range is preferably between 60°C and 90°C. In this range the chemical resistivity has been found excellent.

The connecting components of the present invention can be produced by a freon-free technology without comprising any unhealthy material.

Some examples for the physical parameters of the material applied:

| | | | |
|---|---|---|---|
| Bulk density (kg/m³): | 30±3 | 45±6 | 90±10 |
| Tensile strength (MPa): | >0.2 | >0.4 | >0.9 |
| Elongation at break (%): | >70 | >80 | >140 |
| Vapour diffusion resistance (µ): | 3800 | 4200 | 4500 |
| Linear elongation: | | max-2% | |
| Coefficient of thermal conductivity | | | |
| on 10°C (W/mK): | 0.039 | 0.04 | 0.05 |
| Vapour diffusion resistance | | | |
| (10/13Kg/msPa) | 5.4 | 2.6 | 2.2 |

In the air-handling systems such as commercial or industrial ventilation and air-conditioning, where the connecting component 1 according to the invention is applied, the duct elements 2 are made from polyolefine strip, too. The strips are wound up by overlapping and strengthened in the overlapping area with a plastic or metal thread. The width of the overlapping area defines the stiffness or flexibility of the duct element. The thickness of the base material varies in the range of 5 and 10 mm-s depending on the field of end-use.

In case of the most general embodiment the outer surface of the duct elements 2 and that of the connecting components 1 of a ductwork can be covered with evaporized metal layer, the inner surface is coated with another film layer, e.g. with a plastic film layer. All the elements of the air-handling system may also be coloured.

The loss of flow of both the duct element 2 (rigid or flexible) and the connecting component 1 can be defined by the flow rate of the air and by the diameter of the components.

The connecting components according to the present invention can be coupled directly to the duct elements 2 with metal boots or with other coupling elements known per se.

The duct elements 2 can be hanged on with hangers 3 or by means of any other elements known per se. The hangers can be made from the same material as that of the base material. Thus the movement and vibration of the ductwork components will not be transmitted to the construction elements of the building.

On assembling the ductwork components the exact adjustment and fixation of duct elements 2 and connecting components 1 should be assured. The coupling area may be adhered and covered with a self-adhesive insulating tape.

The distance between the hangers of the duct elements depends always on the weight of duct elements 2 and connecting components 1.

## Claims

1. Method for producing ductwork connecting components preferably for air-handling systems, by preparing first the pattern of a connecting component from a foam-sheet then cutting out the pattern **characterized by that** the foam- 14 sheet is made of chemically cross-linked polyolefine with closed cell-structure, and forming the final shape of the connecting component is done by welding the corresponding edges.

2. Method according to claim 1, **characterized by that** welding is carried out by hot welding, preferably hot air.

3. Method according to claim 1 or 2, **characterized by that** the polyolefine foam sheet is preferably coated with evaporized metal layer on one side before cutting.

4. Method according to any of claims 1-3, **characterized by** strengthening the connecting edges with metal.

5. Method according to any of claims 1-4, **characterized by that** the foam sheet of polyolefine being provided with an evaporized metal layer on one side.

6. Method according to any of claims 1-5, **characterized by that** the bulk density of the foam sheet is in the range of 30-90 kg/m³.

## Patentansprüche

1. Verfahren zur Herstellung von Rohrverbindungsstücken, vorzugsweise für Luftbehandlungssysteme, wobei zuerst das Schnittmuster eines Verbindungsstückes auf einer Schaumplatte angefertigt wird, wonach das Schnittmuster zugeschnitten wird, **dadurch gekennzeichnet, dass** die Schaumplatte aus einem chemisch vernetzten Polyolefin geschlossener Zellstruktur hergestellt wird und die Endform des Verbindungsstückes durch Verschweißen der entsprechenden Ränder ausgebildet wird.

2. Verfahren nach Anspruch 1, **dadurch gekennzeichnet, dass** das Schweißen durch Wärmeschweißen, vorzugsweise mit Hilfe von heißer Luft durchgeführt wird.

3. Verfahren nach Anspruch 1 oder 2, **dadurch gekennzeichnet, dass** die Schaumplatte aus Polyolefin vor dem Zuschnitt an einer Seite vorzugsweise mit einer verdampften Metallschicht überzogen wird.

4. Verfahren nach einem der Ansprüche 1 bis 3, **dadurch gekennzeichnet, dass** die Verbindungsränder durch Metall verstärkt werden.

5. Verfahren nach einem der Ansprüche 1 bis 4, **dadurch gekennzeichnet, dass** die Schaumplatte aus Polyolefin an der einen Seite mit einer verdampften Metallschicht versehen ist.

6. Verfahren nach einem der Ansprüche 1 bis 5, **dadurch gekennzeichnet, dass** das Volumengewicht der Schaumplatte im Bereich von 30 bis 90 kg/m³liegt.

## Revendications

1. Procédé pour la fabrication des pièces de raccordement d'un réseau de conduites, avantageusement pour un système de traitement d'air, préparant tout d'abord le patron de coupe de la pièce de raccordement sur une plaque de mousse et puis en découpant le patron de coupe, **caractérisé en ce que** la plaque de mousse est produite d'un polyoléfine réticulé chimiquement et elle a une structure cellulaire fermée, la forme finale de la pièce de raccordement étant formée par la soudure des bordures correspondantes.

2. Procédé selon la revendication 1, **caractérisé en ce que** la soudure est effectuée par soudure thermique, avantageusement avec de l'air chaud.

3. Procédé selon la revendication 1 ou 2, **caractérisé en ce que** la plaque de mousse en polyoléfine est avantageusement recouverte avec une couche de métal évaporée sur l'une de ses faces avant d'être découpée.

4. Procédé selon l'une des revendication 1 à 3, **caractérisé en ce que** les bordures raccordées sont renforcées par un métal.

5. Procédé selon l'une des revendication 1 à 4, **caractérisé en ce que** la plaque de mousse en polyoléfine est pourvue d'une couche de métal évaporée sur l'une des faces.

6. Procédé selon l'une des revendication 1 à 5, **caractérisé en ce que** le poids spécifique volumétrique de la plaque de mousse est dans la gamme de 30 à 90 kg/m³.
